# EUROPÄISCHE PATENTANMELDUNG

(11) **EP 4 711 122 A2**
(43) Veröffentlichungstag der Anmeldung: **18.03.2026**
(21) Anmeldenummer: 25197650.2
(22) Anmeldetag: 22.08.2025
(51) Int. Cl.: B29D 30/06

(54) **HEIZPLATTENEINHEIT**

(30) Priorität: 17.09.2024 DE 102024208830
(71) Anmelder: Continental Reifen Deutschland GmbH, 30175 Hannover (DE)
(72) Erfinder: Voss, Constantin, 30175 Hannover (DE); Krohne, Holger, 30175 Hannover (DE); Schlinker, Arne, 30175 Hannover (DE)
(74) Vertreter: Continental Corporation

(57) **Zusammenfassung**

Die Erfindung betrifft eine Heizplatteneinheit (2) für eine elektrisch beheizbare Heizpresse zum Vulkanisieren eines Kautschukprodukts, insbesondere eines Fahrzeugreifens, wobei die Heizplatteneinheit (2) eine Heizplatte (1) mit Vertiefungen (3) zur Aufnahme von elektrischen Heizelementen aufweist sowie elektrische Heizelemente und eine elektrische Stromversorgung sowie Temperaturfühler und eine Regelungseinheit zur Regelung der Stromversorgung.

## Beschreibung

Die Erfindung betrifft eine Heizplatteneinheit für eine elektrisch beheizbare Heizpresse zum Vulkanisieren eines Kautschukprodukts, insbesondere eines Fahrzeugreifens. Weiterhin betrifft die Erfindung eine elektrisch beheizbare Heizpresse sowie ein Verfahren zum Betreiben einer elektrischen Heizpresse.

Eine Vorrichtung der genannten Art zum Heizen von Kautschukprodukten ist allgemein bekannt. Diese verwenden typischerweise Dampf zum Beheizen der Heizplatteneinheiten, was einen geringe Energieeffizienz zur Folge hat. Es sind auch elektrische Heizplatteneinheiten bekannt, die jedoch eine ungleichmäßigen Wärmeeintrag von Heizelementen in die Heizplatte mit sich bringen und somit zu ungleichmäßig geheizten Produkten führen. Weiterhin sind derartige Heizplatteneinheiten aufwendig in der Herstellung oder ihrer Temperaturreglung, insbesondere durch verschiedenartige Heizelemente.

Vor diesem Hintergrund liegt der Erfindung die Aufgabe zugrunde, eine Heizplatteneinheiten derart auszuführen, dass sie energieeffizient ist und ein einfacher Aufbau sowie Betrieb ermöglicht wird, wobei ein besonders gleichmäßig erwärmtes Produkt ermöglicht wird.

Diese Aufgabe wird gelöst mit einer Heizplatteneinheiten gemäß den Merkmalen des Patentanspruches 1 sowie einer Heizpresse und einem Verfahren gemäß den nebengeordneten Ansprüchen. Die Unteransprüche betreffen besonders zweckmäßige Weiterbildungen der Erfindung.

Erfindungsgemäß ist also eine Heizplatteneinheit für eine elektrisch beheizbare Heizpresse zum Vulkanisieren eines Kautschukprodukts, insbesondere eines Fahrzeugreifens vorgesehen. Die Heizplatteneinheit weist eine Heizplatte mit Vertiefungen zur Aufnahme von elektrischen Heizelementen auf sowie elektrische Heizelemente und eine elektrische Stromversorgung sowie Temperaturfühler und eine Regelungseinheit zur Regelung der Stromversorgung, wobei die Vertiefungen derart ausgestaltet sind, dass die elektrischen Heizelemente jeweils die gleiche Länge aufweisen und/oder elektrische Heizelemente über ihre Erstreckung abstandsgleich zueinander in der Heizplatte einbringbar sind.

Die Verwendung von gleichlangen Heizelementen ermöglicht einen besonders einfachen Aufbau einer Heizplatteneinheit. Neben der Verwendung von Gleichteilen wird auch die Steuerung der Heizelemente vereinfacht. Das abstandsgleiche vorsehen der Heizelemente zueinander ermöglicht in einfacher weise einen besonders gleichmäßigen Wärmeeintrag in die Heizplatte und somit vorteilhaft geheizte Produkte.

Eine bevorzugte Ausführungsform sieht vor, dass die Heizplatte Vertiefungen für zwölf Heizelemente, insbesondere für drei Heizelemente pro Quadrant aufweist. Ein besonders einfacher Aufbau einer Heizplatteneinheit wird erreicht.

Eine weitere bevorzugte Ausführungsform sieht vor, dass die Heizplatte einen Temperaturfühler, bevorzugt einen Temperaturfühler pro Quadrant aufweist. Das Vorsehen des Temperaturfühlers in der Heizplatte ermöglicht es den Wärmeeintrag in das Produkt mit hoher Genauigkeit zu bestimmen. Mehrere Temperaturfühler in einer Heizplatte ermöglichen eine besonders gezielte Temperaturregelung des Produkts.

Eine weitere bevorzugte Ausführungsform sieht vor, dass die Heizplatteneinheit in bekannten Heizpressen verwendbar ist.

Eine weitere bevorzugte Ausführungsform sieht vor, dass die Heizelemente mit Gleichstrom betreibbar sind.

Eine weitere bevorzugte Ausführungsform sieht vor, dass die Leistungsregelung durch eine anpassbare Konstantleistung erzeugbar ist. Eine geregelte Leistung, die konstant, im Sinne von nicht gepulst abgegeben wird, erzeugt keine Temperaturspitzen und führt zu bevorzugt geheizten Produkten. Erfindungsgemäß ist eine elektrisch beheizbare Heizpresse ausweisend eine erfindungsgemäße Heizplatteneinheit vorgesehen. Besonders gleichmäßig geheizte Produkte werden ermöglicht.

Erfindungsgemäß ist ein Verfahren zum Betreiben einer erfindungsgemäßen elektrisch beheizbaren Heizpresse vorgesehen. Das Herstellen von besonders gleichmäßig geheizten Produkte wird ermöglicht.

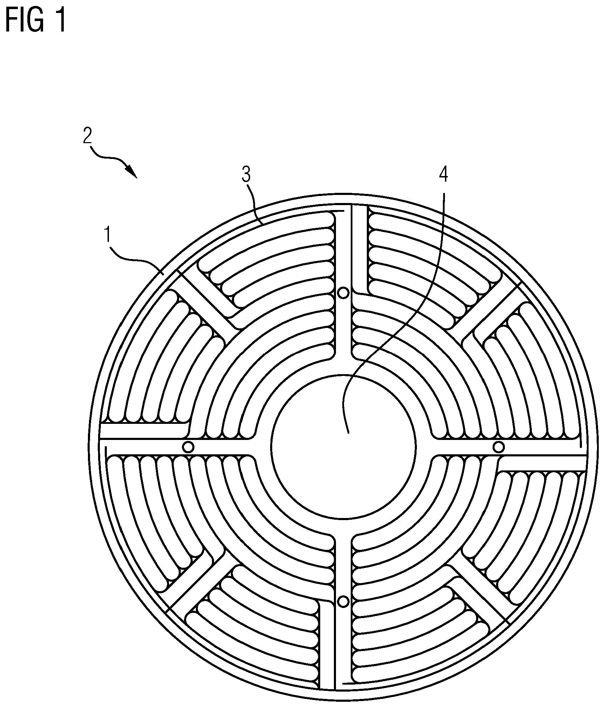

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigt in
Fig. 1 eine Heizplatte für eine Heizplatteneinheit.

Figur 1 zeigt eine Heizplatte 1 für eine Heizplatteneinheit 2 für eine elektrisch beheizbare Heizpresse zum Vulkanisieren eines Kautschukprodukts, und zwar eines Fahrzeugreifens.

Die Heizplatte 1 weist Vertiefungen 3 zur Aufnahme von elektrischen Heizelementen auf, sowie - nicht dargestellt - elektrische Heizelemente und eine elektrische Stromversorgung sowie Temperaturfühler und eine Regelungseinheit zur Regelung der Stromversorgung der Heizelemente. Die Vertiefungen 3 sind derart in die Heizplatte 1 eingebracht, dass die elektrischen Heizelemente, die in die Vertiefungen 3 verlegt sind, jeweils die gleiche Länge aufweisen und über ihre Erstreckung abstandsgleich zueinander in der Heizplatte eingebracht sind. Die Weise der Verlegung der elektrischen Heizelemente erzeugt eine besonders gleichmäßige Abdeckung der Heizplatte mit den elektrischen Heizelementen. Zentral in der Heizplatte ist eine kreisförmige Aussparung 4 angeordnet, die Bauraum für ein Innenheizung von Fahrzeugreifen freigibt.

### Bezugszeichenliste

- 1: Heizplatte
- 2: Heizplatteneinheit
- 3: Vertiefung
- 4: Aussparung

## Patentansprüche

1. Heizplatteneinheit (2) für eine elektrisch beheizbare Heizpresse zum Vulkanisieren eines Kautschukprodukts, insbesondere eines Fahrzeugreifens, wobei die Heizplatteneinheit (2) eine Heizplatte (1) mit Vertiefungen (3) zur Aufnahme von elektrischen Heizelementen aufweist sowie elektrische Heizelemente und eine elektrische Stromversorgung sowie Temperaturfühler und eine Regelungseinheit zur Regelung der Stromversorgung,
**dadurch gekennzeichnet, dass**
die Vertiefungen (3) derart ausgestaltet sind, dass die elektrischen Heizelemente jeweils die gleiche Länge aufweisen und/oder elektrische Heizelemente über ihre Erstreckung abstandsgleich zueinander in der Heizplatte (1) einbringbar sind.

2. Heizplatteneinheit (2) nach Anspruch 1, **dadurch gekennzeichnet, dass** die Heizplatte (1) Vertiefungen für zwölf Heizelemente, insbesondere für drei Heizelemente pro Quadrant aufweist.

3. Heizplatteneinheit (2) nach den Ansprüchen 1 oder 2, **dadurch gekennzeichnet, dass** die Heizplatte (1) einen Temperaturfühler, bevorzugt einen Temperaturfühler pro Quadrant aufweist.

4. Heizplatteneinheit (2) nach einem der vorangehenden Ansprüche, **dadurch gekennzeichnet, dass** die Heizplatteneinheit (2) in bekannten Heizpressen verwendbar ist.

5. Heizplatteneinheit (2) nach einem der vorangehenden Ansprüche, **dadurch gekennzeichnet, dass** die Heizelemente mit Gleichstrom betreibbar sind.

6. Heizplatteneinheit (2) nach einem der vorangehenden Ansprüche, **dadurch gekennzeichnet, dass** die Leistungsregelung durch eine anpassbare Konstantleistung erzeugbar ist.

7. Elektrisch beheizbare Heizpresse ausweisend eine Heizplatteneinheit (2) nach einem der vorhergehenden Ansprüche.

8. Verfahren zum Betreiben einer elektrisch beheizbaren Heizpresse nach Anspruch 7.
